# EUROPÄISCHE PATENTSCHRIFT

(11) **EP 2 654 437 B1**
(45) Veröffentlichungstag und Bekanntmachung des Hinweises auf die Patenterteilung: **16.11.2016**
(21) Anmeldenummer: 11781744.5
(22) Anmeldetag: 22.10.2011
(51) Int. Cl.: A21C 1/06, B01F 7/04, B01F 7/00

(54) **KNETVORRICHTUNG ZUM KNETEN UND MISCHEN VON TEIG**
KNEADING APPARATUS FOR KNEADING AND MIXING DOUGH
DISPOSITIF À PÉTRIR POUR PÉTRIR ET MÉLANGER DE LA PÂTE

(30) Priorität: 23.12.2010 DE 102010055800
(43) Veröffentlichungstag der Anmeldung: 30.10.2013
(73) Patentinhaber: DIOSNA Dierks & Söhne GmbH, 49086 Osnabrück (DE)
(72) Erfinder: BENSMANN, Stefan, 49078 Osnabrück (DE); GHANI, Ashem, 49086 Osnabrück (DE); ACKERMANN, Gerrit, 49143 Bissendorf (DE)
(74) Vertreter: Busse & Busse
(86) Internationale Anmeldenummer: PCT/EP2011/005335
(87) Internationale Veröffentlichungsnummer: WO 2012/084079

(56) Entgegenhaltungen:
- EP-A1- 1 192 861
- EP-A2- 1 033 163
- DE-A1- 19 507 181
- DE-A1- 19 636 989
- DE-A1-102007 011 505
- DE-U1- 29 517 612
- FR-A1- 2 380 066
- JP-A- 11 179 180
- JP-A- 56 064 750
- JP-A- 57 027 121
- US-A- 2 957 681
- US-A- 3 194 504
- US-A- 4 428 535
- US-A- 4 655 701

## Beschreibung

Die Erfindung betrifft eine Knetvorrichtung zum Kneten und Mischen von Teig, mit einem umseitig zumindest bereichsweise von einer Wandung begrenzten Knetraum, der eine Austragsöffnung zum Austrag des gekneteten Teigs aus dem Knetraum und einen an der der Austragsöffnung abgewandten Seite des Knetraums angeordneten Eintragsbereich zur Befüllung des Knetraums mit zu knetendem Teig aufweist. Die Knetvorrichtung umfasst ferner zumindest zwei Wellen, an denen im Knetraum angeordnete Werkzeuge fixiert sind, wobei zumindest eines der Werkzeuge Teig vom Eintragsbereich ein Förderrichtung zur Austragsöffnung hin fördernd ausgebildet ist.

Derartige Knetvorrichtungen sind als sogenannte Kontikneter zur Teigherstellung in der Lebensmitteltechnologie bekannt. Der Knetraum wird dabei von einem Knettrog gebildet, in dem sich zwei mit Knetwerkzeugen bestückte Wellen drehen. Die Knetwerkzeuge kneten den Teig und fördern ihn gleichzeitig in Förderrichtung. Die gemeinsame Drehzahl der beiden Wellen kann dabei erhöht oder aber abgesenkt werden, wodurch der Knetvorgang und auch die Förderung von Teig in Förderrichtung verändert wird. Nachteilig an derartigen Knetvorrichtungen ist jedoch, dass die Knetwirkung der Vorrichtung einerseits und die Förderwirkung in Form eines Volumenstromes von Teig in Förderichtung andererseits getrennt voneinander nur dadurch verändert werden kann, dass die Knetwerkzeuge durch andere Knetwerkzeuge ausgetauscht werden, die den Teig beispielsweise schneller in Förderrichtung zu einer Austrittsöffnung hin fördern. Der Umbau einer derartigen Vorrichtung ist jedoch sehr aufwendig.

Aus der japanischen Patentanmeldung JP 57027121A ist eine Mischvorrichtung bekannt, die einer Vermischung von eingetragenem Material dient. Hierzu wird das zu durchmischende Material durch eine Eingangsöffnung in einen Mischraum überführt. In dem Mischraum sind zwei gegenläufig rotierende Wellen mit identischer Rotationsachse angeordnet, von denen die eine Welle mit paddelartigen Werkzeugen bestückt ist und die andere Welle dicht an der rund geformten Wandung des Mischraumes geführt wird. Die Paddel dienen dazu, das zu mischende Material von der Mitte des Mischraumes weg den Werkzeugen der weiteren Welle zuzuführen.

Der Erfindung liegt die Aufgabe zugrunde, eine Vorrichtung der eingangs genannten Art bereitzustellen, bei der die Knetwirkung einerseits und die Förderwirkung andererseits auf einfache Weise jeweils veränderbar sind.

Die Erfindung wird durch eine Knetvorrichtung entsprechend Anspruch 1 gelöst, bei der die Drehzahlen der beiden motorisch angetriebenen Wellen getrennt voneinander mit Hilfe einer Steuerung einstellbar und veränderbar sind. Beide Wellen sind zudem dergestalt voneinander abweichend mit Werkzeugen bestückt, dass die Förderwirkung der Gesamtheit der Werkzeuge der ersten Welle in Form eines Volumenstromes des im Knetraum befindlichen Teiges in Förderrichtung und/oder die Knetwirkung der Gesamtheit der Werkzeuge der ersten Welle in Form eines Volumenstromes des im Knetraum befindlichen Teiges in Richtung zu den Werkzeugen der anderen Welle hin von der Förderwirkung und/oder der Knetwirkung der Gesamtheit der Werkzeuge der zweiten Welle bei jeweils gleicher Drehzahl der Wellen abweicht. Gedanklich wird die Wirkung der Werkzeuge jeder Welle somit jeweils in zwei Komponenten aufgeteilt. Eine erste, als Förderwirkung bezeichnete Komponente besteht darin, in welchem Ausmaß die Werkzeuge einer Welle geeignet sind, im Knetraum befindlichen Teig in Förderrichtung zu transportieren. Die zweite, als Knetwirkung bezeichnete Komponente besteht darin, in welchem Ausmaß die Werkzeuge einer Welle geeignet sind, im Knetraum befindlichen Teig quer zur Förderrichtung in Richtung zu den Werkzeugen der jeweils anderen Welle hin zu bewegen. Erst durch diese Bewegung ergibt sich im Zusammenspiel mit den Werkzeugen der jeweils anderen Welle ein Drücken, Ziehen und Scheren des Teiges und damit die Knetwirkung. Von einander abweichende Förder- und Knetwirkungen der Gesamtheit der Werkzeuge der jeweiligen Wellen lassen sich dabei auf unterschiedliche Arten realisieren. Die Wellen werden bevorzugt mit unterschiedlichen Werkzeugen bestückt, wobei die Förderwirkung und/oder die Knetwirkung der verschiedenen Werkzeuge voneinander abweichen. Die Wellen können alternativ hierzu aber auch mit den gleichen Werkzeugen bestückt werden, wobei an jeder Welle zumindest zwei unterschiedliche Werkzeuge mit voneinander abweichenden Förder- und/oder Knetwirkungen angeordnet sind und die Anzahl der jeweiligen Werkzeuge oder deren Verteilung auf den Wellen voneinander abweicht.

Durch diese Kombination aus getrennt einstellbaren Drehzahlen der Wellen und unterschibdlichen Förder- und oder Knetwirkungen der Werkzeuge der Wellen wird erreicht, dass die Knetwirkung und die Förderwirkung als wichtigem Faktor für die Austragsleistung der Knetvorrichtung getrennt voneinander eingestellt werden können. Soll beispielsweise die Knetwirkung bei gleichbleibender Förderwirkung erhöht werden, so wird die Drehzahl derjenigen Weile erhöht, die mit Werkzeugen bestückt ist, die insgesamt eine höhere Knetwirkung haben, als die Werkzeug der anderen Welle. Um die Förderwirkung und damit indirekt auch die Austragsleistüng der Vorrichtung insgesamt auf dem bisherigen Niveau konstant halten zu können, wird gleichzeitig die Rotationsgeschwindigkeit der anderen Welle ggf. reduziert, bis die ursprüngliche Förderwirkung wieder hergestellt ist, die sich aus der Summe der fürderwirkung aller im Knetraum befindlicher Werkzeuge bei den jeweiligen Rotatiönsgeschwindigkeiten der Wellen ergibt.

Mit Hilfe der Steuerung können die Drehzahlen der beiden Wellen mit Vorteil so eingestellt werden, dass die Förderwirkung unterhalb der durch die Größe der Austragsöffnung und durch die Entfernung des die Austragsöffnung bereits passierenden Teiges definierte maximal mögliche Austragsleistung der Knetvorrichtung verbleibt. Das Kneten im Knetraum und der Austrag erfolgen dabei weitgehend drucklos. Hierdurch ergeben sich besonders vorteilhafte rheologische Eigenschaften des die Knetvorrichtung verlassenden Teiges.

Die erste Welle und die daran fixierten Werkzeuge sind zudem innerhalb eines gedachten Zylindermantels angeordnet, auf dem die zur ersten Welle hinweisenden inneren Kanten der an der zweiten Welle fixierten Werkzeuge während einer Rotation um die Achse der zweiten Welle laufen. Während einer Rotationsbewegung der zweiten Welle und der daran angeordneten Werkzeuge wird ein um die Rotationsachse der zweiten Welle herum befindlicher zylinderförmiger Bereich nicht von den Werkzeugen der zweiten Welle durchlaufen. In diesem gedachten Zylinder sind die erste Welle sowie die daran fixierten Werkzeuge angeordnet. Während Rotationsbewegungen der beiden Wellen bewegen sich die Werkzeuge der ersten Welle innerhalb eines von den Werkzeugen der zweiten Welle freien Bereiches. Die Werkzeuge der zweiten Welle umlaufen hingegen während einer Rotation die Werkzeuge der ersten Welle.

Die Werkzeuge der ersten Welle werden von einer Mehrzahl Paddel mit einer während einer Rotation der ersten Welle im Knetraum befindlichen Teig bewegenden Paddelfläche gebildet. Dabei sind die Paddel entlang der ersten Welle versetzt zueinander angeordnet und die Bewegungsbahnen der Paddelflächen von zwei benachbarten Paddeln überlappen sich während einer Rotation um die Achse der ersten Welle teilweise. Hierdurch wird ein Totraum innerhalb dessen sich Teig sammeln könnte, verhindert.

Die Werkzeuge der zweiten Welle werden von einer Mehrzahl Förderknetsegmenten gebildet, die jeweils eine während einer Rotation der zweiten Welle im Knetraum befindlichen Teig bewegende Arbeitsfläche aufweisen und entlang der Welle versetzt zueinander angeordnet sind. Dabei überlappen sich die Bewegungsbahnen der Arbeitsflächen von zwei benachbarten Förderknetsegmenten während einer Rotation um die Achse der zweiten Welle zumindest teilweise. Durch diese Ausgestaltung wird erreicht, dass kein Totraum zwischen einzelnen Förderknetsegmenten entstehen kann, in dem sich ungewollt Teig ablagert.

Der minimale Abstand zwischen den Paddeln und den Förderknetsegmenten beträgt 1,5 mm bis 15,0 mm und bevorzugt 5,0 mm bis 10,0 mm. Durch diese Ausgestaltung ist die Vorrichtung in der Lage, eine große Vielzahl unterschiedlicher Teige zu kneten, ohne dass Werkzeuge oder gar Wellen der Vorrichtung ausgetauscht werden müssen.

In einer bevorzugten Ausgestaltung der Erfindung stimmt die Rotationsachse der ersten Welle mit der Rotationsachse der zweiten Welle überein. Wird jedoch außerhalb des Knetraumes eine Excenterschneckenpumpe an die Austragsöffnung zum besseren Abtransport des die Austragsöffnung verlassenden Teigs angeschlossen, die zusätzlich nicht von einer eigenen Welle angetrieben wird sondern von der ersten Welle, so umläuft die Rotationsachse der ersten Welle auf einer sich wiederholenden Bahn die Rotationsachse der zweiten Welle.

Weitere vorteilhafte Ausgestaltungen der Erfindung sind den Unteransprüchen zu entnehmen.

Mit Vorteil ist die Abweichung der Förderwirkung der Gesamtheit der Werkzeuge der zweiten Welle mehr als doppelt so hoch, insbesondere mehr als neun mal so hoch, wie die Förderwirkung der Gesamtheit der Werkzeuge der ersten Welle bei jeweils gleicher Drehzahl. Besonders bevorzugt weist allein die Gesamtheit der Werkzeuge der zweiten Welle in Summe eine Förderwirkung auf. Durch diese Ausgestaltungen wird jeweils erreicht, dass durch eine verstärkte Rotation der zweiten Welle die Förderwirkung in Form eines Volumenstromes des im Knetraum befindlichen Teiges in Förderrichtung erhöht werden kann. Umgekehrt kann die Knetwirkung der Vorrichtung insgesamt dadurch erhöht werden, dass die Drehzahl der ersten Welle erhöht wird. Ein umständlicher Wechsel der an den Wellen befindlichen Werkzeugen ist hierfür nicht mehr erforderlich.

Mit Vorteil umfasst die zweite Welle parallel zur Förderrichtung angeordnete, zueinander regelmäßig beabstandete Streben, an denen die Werkzeuge der zweiten Welle fixiert sind. Die zweite Welle weist zudem ein erstes kreisförmiges Fixierungselement und ein weiteres kreisförmiges Fixierungselement auf, an denen die Streben der zweiten Welle fixiert sind. Die erste Welle wird dabei durch den Kreismittelpunkt des ersten kreisförmigen Fixierungselements geführt und ist nicht gegenüber diesen festgelegt. Die beiden Wellen haben zudem bevorzugt einen entgegengesetzten Drehsinn. Durch die vorgenannten Ausgestaltungen wird jeweils unabhängig voneinander erreicht, dass die Knetwirkung und die Förderwirkung durch Variation der Drehzahl der beiden Wellen in einfacher Weise variiert werden können.

Jede Paddelfläche ist dabei bevorzugt zu wenigstens 90 % in einer Paddelflächenebene liegend ausgebildet. Die Paddel lassen sich so besonders einfach und solide fertigen.

In einer besonders bevorzugten Ausgestaltung der Erfindung sind die Paddelflächen zu wenigstens 90 % parallel zur Rotationsachse der ersten Welle angeordnet. Hierdurch wird erreicht, dass die Förderwirkung der Paddel nur sehr schwach ausgebildet ist. Besonders bevorzugt sind die Paddelflächen sogar vollständig parallel zur Rotationsachse der ersten Welle angeordnet. Die Paddel haben in diesem Fall keine Förderwirkung mehr und nur noch eine reine Knetwirkung, indem der Teig den Werkzeugen der zweiten Welle zugetrieben wird.

Mit Vorteil weist die Paddelfläche eine den Werkzeugen der zweiten Welle zugewandte äußere Abschlusskante und eine dieser gegenüberliegende innere Abschlusslinie auf. Ein radial von der Achse der ersten Welle ausgehender, die innere Abschlusslinie streifender erster Strahl schließt dabei einen Winkel von 90 Grad bis 60 Grad mit der Paddelflächenebene ein und ein die äußere Abschlusskante streifender weiterer radialer Strahl schließt einen Winkel zwischen 0 Grad und 35 Grad mit der Paddelflächenebene ein. Durch diese Ausgestaltung eignen sich die Paddel in besonderem Maße als Knetwerkzeuge, die den Teig den Werkzeugen der zweiten Welle zutreiben. Werden die einzelnen Paddel dabei als separate Bauteile ausgearbeitet, so wird die innere Abschlusslinie von einer inneren Abschlusskante gebildet.

Bevorzugt liegt die Arbeitsfläche jedes Förderknetsegmentes zu wenigstens 90 % in einer Förderknetsegmentebene. Besonders bevorzugt liegt die Arbeitsfläche jedes Förderknetsegmentes sogar vollständig in einer Förderknetsegmentebene. Dies ist in einer vorteilhaften Ausgestaltung der Erfindung der Fall, in der die Förderknetsegmente aus Flachstahl bestehen. Durch diese Ausgestaltung wird jeweils unabhängig voneinander erreicht, dass Teig besonders effektiv einerseits in Förderrichtung bewegt werden kann und andererseits den Werkzeugen der ersten Welle zur Erzielung einer Knetwirkung zugeschoben werden kann. Zwischen den Förderknetsegmenten und den Werkzeugen der ersten Welle wird dabei Teig hin und her bewegt und zudem geschert und miteinander vermengt.

In einer besonders bevorzugten Ausgestaltung der Erfindung weist jedes Förderknetsegment eine den Werkzeugen der ersten Welle zugewandte innere Abschlusskante und eine dieser gegenüberliegende, der Wandung des Knetraums zugewandte äußeren Abschlusskante auf. Dabei sind beide Abschlusskanten dergestalt bogenförmig ausgebildet, dass die Förderknetsegmente in einer Projektion auf eine senkrecht zur Rotationsachse der zweiten Welle verlaufende Querschnittsebene die Form einer Sektors eines Kreisringes mit einem Kreismittelpunkt und einer kreisbogenförmigen inneren und äußeren Abschlusskante aufweisen. Besonders bevorzugt haben die Abschlusskanten die Form eines Ausschnittes aus einer Ellipse. Hierdurch kann ebenfalls jeweils unabhängig voneinander verhindert werden, dass im Bereich der Werkzeuge der zweiten Welle Todraum entsteht, indem sich Teig ungewollt ablagern kann.

Mit Vorteil sind die Arbeitsflächen der Förderknetsegmente relativ zur Rotationsachse der zweiten Welle dergestaltgeneigt, dass ein erster Anstellwinkel zwischen der Rotationsachse der zweiten Welle und einem ersten Strahl, der in einer Projektion auf eine senkrecht zur Rotationsachse der zweiten Welle verlaufende Querschnittsebene von dieser Rotationsachse ausgeht und in der Förderknetsegmentebene des zugehörigen Förderknetsegmentes an dem der Austragsöffnung abgewandten Ende der Arbeitsfläche liegt, zwischen 90 Grad und 60 Grad beträgt. Zudem beträgt ein weiterer Anstellwinkel zwischen der Rotationsachse der zweiten Welle und einem weiteren Strahl, der in der Projektion auf eine senkrecht zur Rotationsachse der zweiten Welle verlaufende Querschnittsebene von dieser Rotationsachse ausgeht und in der Förderknetsegmentebene des zugehörigen Förderknetsegmentes liegt, 30 Grad bis 75 Grad. Dabei beträgt der Strahlenzentriwinkel zwischen dem ersten Strahl und dem zweiten Strahl in der Projektion der Strahlen auf die Querschnittsebene 45 Grad bis 90 Grad. Durch diese Abnahme des Anstellwinkels wird erreicht, dass Teig, der von einem Förderknetsegmentmitgenommen wird, zunächst verstärkt in Förderrichtung bewegt wird und nur begrenzt in Richtung der ersten Welle. Bei fortsetzender Rotation eines Förderknetsegments nimmt der Anstellwinkel zunehmend ab, so dass die Förderwirkung des Förderknetsegmentes ebenfalls abnimmt und die Bewegung von Teig in Richtung der Werkzeuge der ersten Rotationsachse zunimmt. Die kontinuierliche Veränderung des Anstellwinkels bewirkt dabei eine Art Faltung des Teiges in Richtung der Werkzeuge der ersten Welle, die rheologisch zu besonders gut geknetetem Teig führt.

Mit Vorteil sind die Förderknetsegmente dergestalt geformt und angeordnet, dass das Verhältnis der Förderwirkung der Gesamtheit der Förderknetsegmente relativ zu deren Knetwirkung 1 bis 5 und insbesondere 2,5 bis 3,5 beträgt. Es hat sich gezeigt, dass diese Verhältnisse besonders geeignet sind, die Förderwirkung und darüber mittelbar die Austragsleistung der Knetvorrichtung einerseits und die Knetwirkung andererseits getrennt voneinander einzustellen.

Bevorzugt beträgt das Verhältnis der Summe der Arbeitsflächen der Förderknetsegmente in einer Projektion auf eine Querschnittsebene senkrecht zur Förderrichtung relativ zur Summe der Paddelflächen der Paddel 0,2 bis 1,1 und insbesondere 0,7 bis 0,9. Es hat sich gezeigt, dass gerade durch das Vorsehen derartiger Verhältnisse Förderwirkung und Knetwirkung der Vorrichtung insgesamt besonders gut veränderbar und einstellbar sind.

Mit Vorteil ergibt eine Projektion der Paddelflächen auf eine Ebene senkrecht zur Förderrichtung während einer vollständigen Rotationsbewegung um die Rotationsache der ersten Welle die Form eines Kreisringes. Das Verhältnis der Summe der Arbeitsflächen der Förderknetsegmente in einer Projektion auf diese Ebene senkrecht zur Förderrichtung relativ zur Fläche des Kreisringes beträgt dabei 0,2 bis 1,1 und insbesondere 0,7 bis 0,9. Es hat sich auch hier gezeigt, dass gerade durch das Vorsehen derartiger Verhältnisse Förderwirkung und Knetwirkung der Vorrichtung insgesamt besonders gut veränderbar und einstellbar sind.

In einer bevorzugten Ausgestaltung der Erfindung weist die zweite Welle parallel zur Rototionsache der zweiten Welle angeordnete Streben auf, an denen die Werkzeuge der zweiten Welle fixiert sind. Zumindest eine der Streben weist zudem eine in Rotationsrichtung der zweiten Welle dem Teig zugewandte Mitnehmerfläche auf, die im Querschnitt der Strebe eben ausgebildet ist oder eine schaufelartige Krümmung aufweist. Durch diese Ausgestaltung der Streben wird erreicht, dass am Boden des Knetraums befindlicher Teig von der Strebe erfasst, umlaufend mitgenommen und an der dem Boden des Knetraums gegenüberliegenden Seite auf die Werkzeuge der ersten Welle fallend wieder abgeben wird. Die Knet- und auch die Förderwirkung wird hierdurch insgesamt verbessert.

Weitere Einzelheiten und Vorteile der Erfindung sind den Unteransprüchen sowie dem nachfolgend beschriebenen, schematischen Ausführungsbeispiel zu entnehmen; es zeigen:
- Fig. 1: eine dreidimensionale Darstellung einer erfindungsgemäßen Knetvorrichtung,
- Fig. 2: die Vorrichtung aus Fig. 1 in einer anderen dreidimensionalen Darstellung,
- Fig. 3: die Vorrichtung aus Fig. 1 in einer weiteren dreidimensionalen Darstellung,
- Fig. 4: die Vorrichtung aus Fig. 1 in einer Detailansicht, die Wellen der Vorrichtung in Alleinstellung zeigend,
- Fig. 5: eine Detailansicht eines Querschnitts durch die Knetvorrichtung nach Fig. 1,
- Fig. 6a bis 6g: verschiedene Detailansichten eines Förderknetsegmentes aus der Knetvorrichtung nach Fig. 1,
- Fig.7: eine Detailansicht der Wellen aus Fig. 1 und
- Fig. 8: eine Detailansicht eines Querschnitts durch eine weiter erfindungsgemäße Knetvorrichtung.

Nachfolgend werden gleich wirkende Elemente der Knetvorrichtung - sofern sinnvoll - mit einer einheitlichen Bezugsziffer versehen. Die nachfolgend beschriebenen Merkmale des Ausführungsbeispiels der erfindungsgemäßen Knetvorrichtung können selbstverständlich auch in anderen Kombinationen Gegenstand der Erfindung sein.

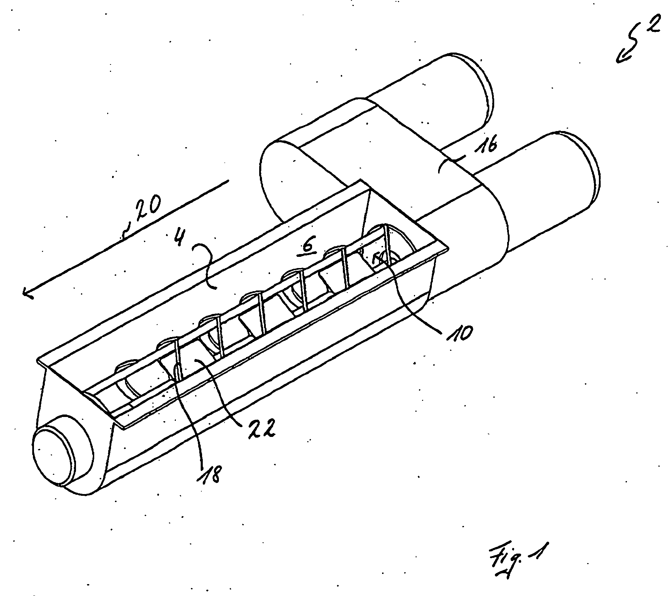

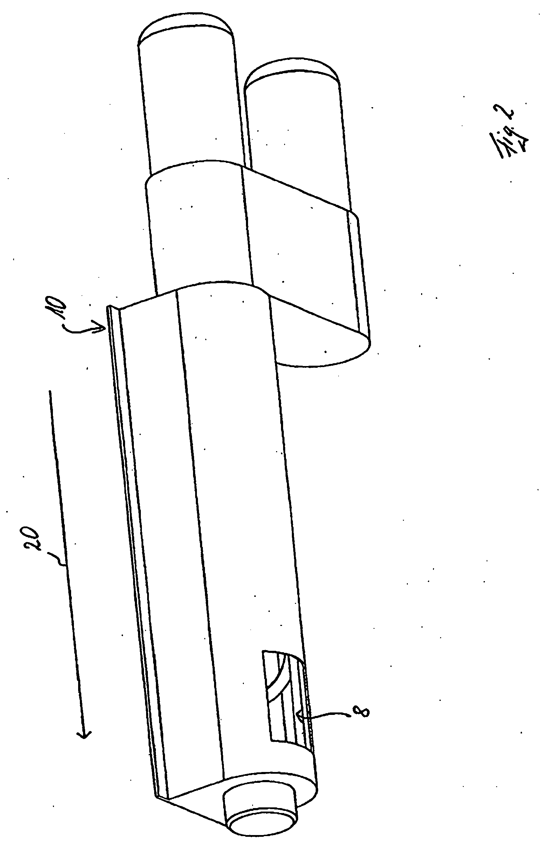

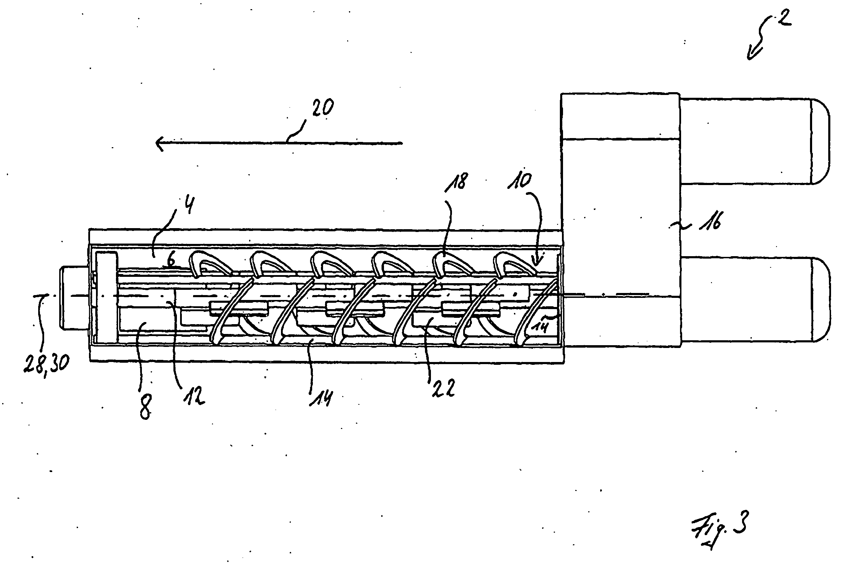

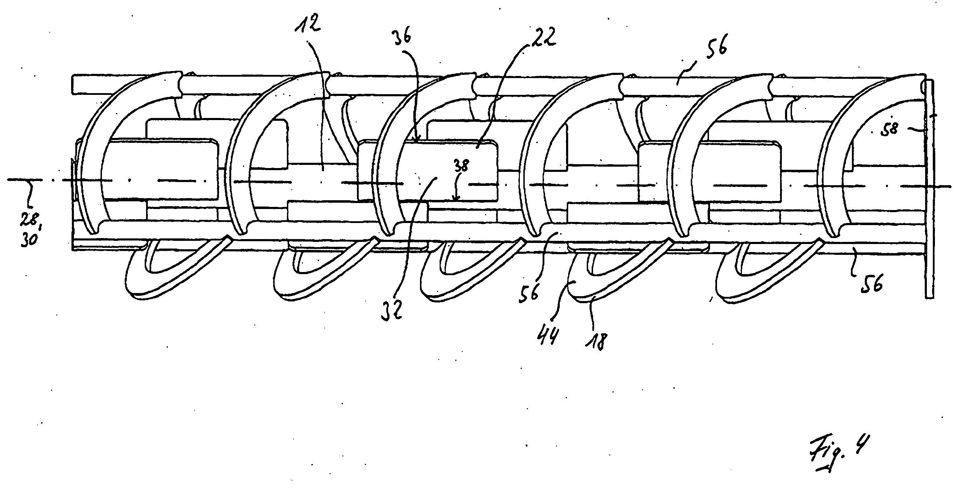

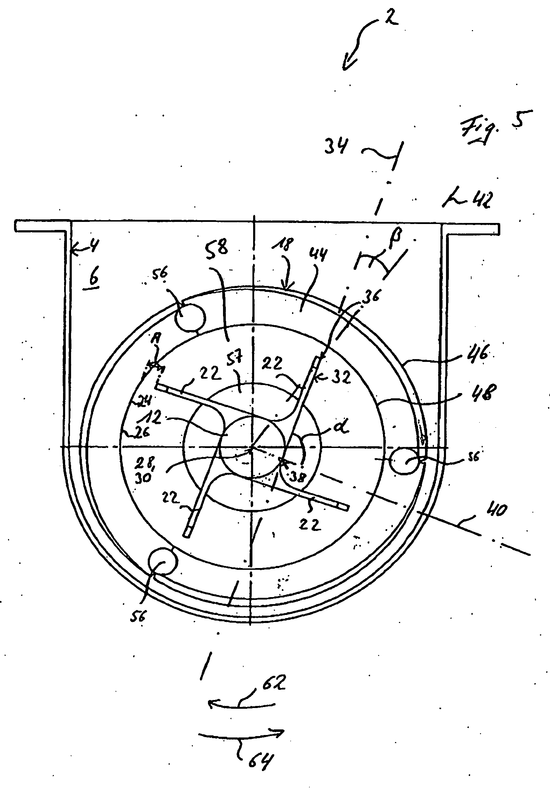

Fig. 1 bis Fig. 3 zeigen eine erfindungsgemäße Knetvorrichtuhg 2 in unterschiedlichen dreidimensionalen Darstellungen. Die Knetvorrichtung 2 umfasst einen umseitig bereichsweise von einer Wandung 4 begrenzten Knetraum 6, der eine in Fig. 2 dargestellte Austragsöffnung 8 zum Austrag des gekneteten Teiges aus dem Knetraum 6 und einen Eintragsbereich 10 zur Befüllung des Knetraums 6 mit zu knetendem Teig aufweist, wobei der Eintragsbereich 10 an der der Austragsöffnung 8 abgewandten Seite des Knetraums 6 angeordnet ist. Die Knetvorrichtung 2 umfasst ferner eine erste Welle 12 und eine zweite Welle 14, die im Detail in den Figuren 4 und 5 dargestellt sind. Die Drehzahlen der beiden motorisch angetrieben Wellen 12, 14 sind mit Hilfe einer Steuerung 16 getrennt voneinander einstellbar und veränderbar.

Die zweite Welle 14 ist mit Förderknetsegmenten 18 bestückt, die Teig vom Eintragsbereich 10 auf der der Austragsöffnung 8 abgewandten Seite des Knetraums 6 in Förderrichtung, dargestellt durch den Pfeil 20, zur Austragsöffnung 8 hin fördernd ausgebildet sind. Unter der abgewandten Seite wird dabei die Seite des Knetraums 6 verstanden, auf der die Welle 14 mit zur Förderung geeigneten Förderknetsegmenten 18 beginnt. Der Eintragsbereich 10 und die Austragsöffnung 8 sind also möglichst weit voneinander beabstandete, um den Teig über eine möglichst lange Wegstrecke in Förderrichtung 20 im Knetraum 6 bearbeiten zu können.

Wie insbesondere aus Fig. 4 und Fig. 5 zu sehen, ist die erste Welle 12 ausschließlich mit Paddeln 22 als Werkzeuge bestückt und die zweite Welle 14 ausschließlich mit Förderknetsegmenten 18. Die erste Welle 12 und die daran fixierten Paddel 22 sind innerhalb eines gedachten Zylindermantels 24 angeordnet, auf dem die zur ersten Welle 12 hinweisenden inneren Kanten 26 der Förderknetsegmente 18 während einer Rotation um die Achse 28 der zweiten Welle 14 laufen. Im vorliegenden Ausführungsbeispiel ist die Rotationsachse 28 der zweiten Welle 14 identisch mit der Rotationsachse 30 der ersten Welle 12.

Die Paddel 22 weisen jeweils eine während einer Rotation, der ersten Welle 12 im Knetraum 6 befindlichen Teig bewegende Paddelfläche 32 auf. Wie insbesondere aus Fig. 4 ersichtlich, sind die Paddel.22 entlang der ersten Welle 12 versetzt zueinander angeordnet und die Bewegungsbahnen der Paddelflächen 32 von zwei benachbarten Paddeln 22 überlappen sich während einer Rotation um die Achse 30 der ersten Welle 12 teilweise. Jede Paddelfläche 32 ist zu wenigstens 90 %, im Ausführungsbeispiels sogar vollständig in einer Paddelflächenebene 34 liegend ausgebildet. Die Paddelflächen 32 sind zudem zu wenigstens 90 %, im Ausführungsbeispiel sogar vollständig parallel zur Rotationsachse 30 der ersten Welle 12 angeordnet.

Jede Paddelfläche 32 weist eine den Förderknetsegmenten 18 zugewandte äußere Abschlusskante 36 und eine dieser gegenüberliegende innere Abschlusslinie 38 auf. Wie in Fig. 5 dargestellt, schließt ein radial von der Achse 30 der ersten Welle 12 ausgehender, die innere Abschlusslinie 38 streifender Strahl 40 einen Winkel α von 90° bis 60° mit der Paddelflächenebene 34 ein. Ein die äußere Abschlusskante 36 streifender weiterer von der Achse 30 der ersten Welle 12 ausgehender Strahl 42 schließt zudem einen Winkel β zwischen 0 Grad und 35 Grad mit der Paddelflächenebene 34 ein.

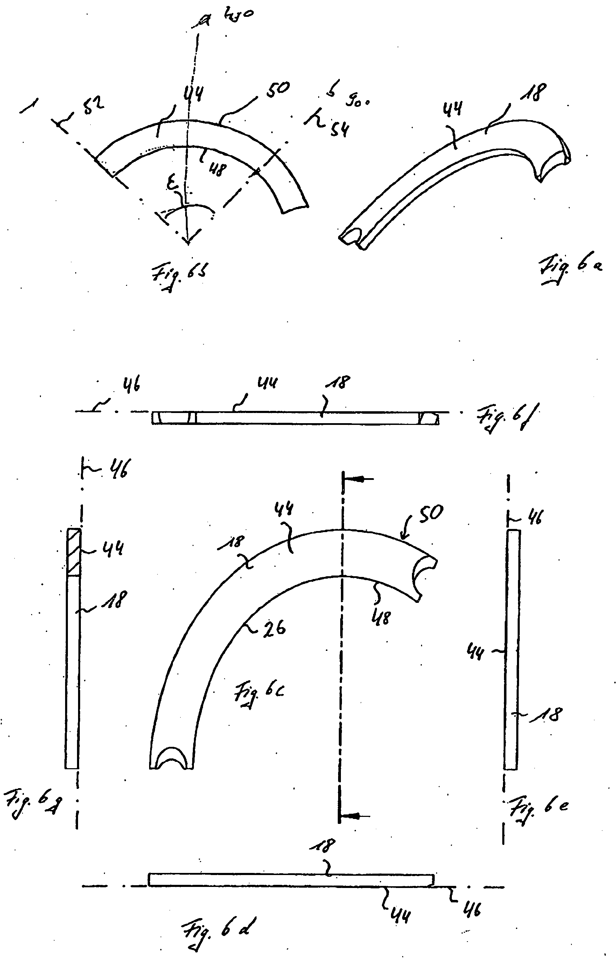

Fig. 4 und Fig. 5 zeigen, dass die Förderknetsegmente 18 jeweils eine Arbeitsfläche 44 aufweist. Die Förderknetsegmente 18 sind entlang der zweiten Welle 14 versetzt zueinander angeordnet, wobei sich die Bewegungsbahnen der Arbeitsflächen 44 von zwei benachbarten Förderknetsegmenten 18 während einer Rotation um die Achse 28 der zweiten Welle 14 zumindest teilweise überlappen. Die Arbeitsfläche 44 jedes Förderknetsegmentes 18 liegt zu wenigstens 90 %, im Ausführungsbeispiel sogar vollständig in einer Förderknetsegmentebene 46. Die Förderknetsegmentebene 46 ist aus den Figuren 6a bis 6g ersichtlich.

Fig. 5 zeigt einen Querschnitt durch die erfindungsgemäße Knetvorrichtung 2 in einer Detailansicht. Aus dieser Darstellung ist ersichtlich, dass jedes Förderknetsegment 18 von einer den Paddeln 22 zugewandten inneren Abschlusskante 48 und eine dieser gegenüberliegenden, der Wandung 4 des Knetraums 6 zugewandten äußeren Abschlusskante 50 begrenzt ist. Beide Abschlusskanten 48, 50 sind dergestalt bogenförmig ausgebildet, dass das Förderknetsegment 18 in einer Projektion auf eine senkrecht zur Rotationsachse 28 der zweiten Welle 14 verlaufende Querschnittsebene, die im Ausführungsbeispiel der Papierebene entspricht, die Form eines Sektors eines Kreisringes mit einem Kreismittelpunkt und kreisbogenförmigen inneren und äußeren Abschlusskanten 48, 50 aufweist. Der Kreismittelpunkt ist dabei mit der Rotationsachse 28 der zweiten Welle 14 identisch. Fig. 6b zeigt noch einmal ein isoliertes Förderknetsegment 18 dergestalt gedreht, wie es in einer Projektion auf die genannte Querschnittsebene erscheint.

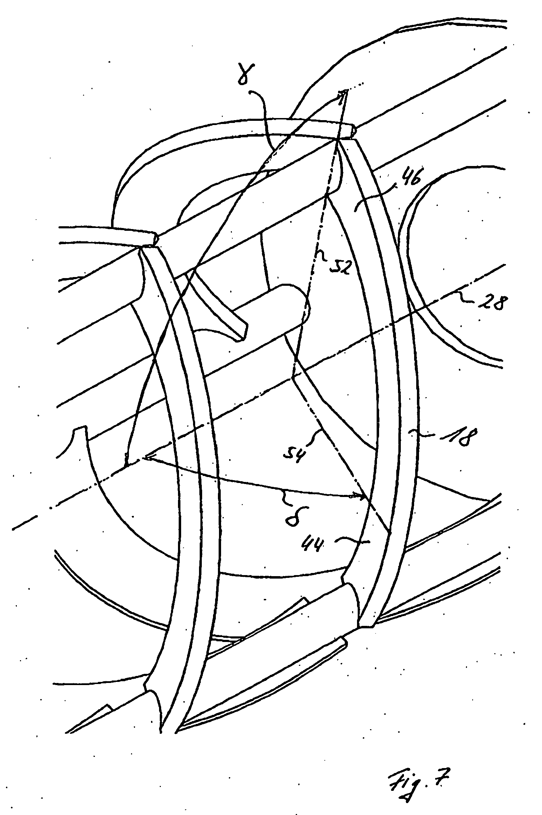

Wie aus Fig. 7 ersichtlich, sind die Arbeitsflächen der Förderknetsegmente 18 relativ zur Rotationsachse 28 der zweiten Welle 14 dergestalt geneigt angeordnet, dass ein erster Anstellwinkel γ zwischen der Rotationsachse 28 der zweiten Welle 14 und einem ersten Strahl 52, der in einer Projektion auf eine senkrecht zur Rotationsachse 28 der zweiten Welle 14 verlaufende Querschnittsebene von dieser Rotationsachse 28 ausgeht und in der Förderknetsegmentebene 46 an dem der Austragsöffnung 8 abgewandten Ende des Förderknetsegmentes 18 liegt, zwischen 90 Grad und 60 Grad beträgt. Ein weiterer Anstellwinkel δ zwischen der Rotationsachse 28 der zweiten Welle 14 und einem weiteren Strahl 54, der in der Projektion auf eine senkrecht zur Rotationsachse 28 der zweiten Welle 14 verlaufende Querschnittsebene von dieser Rotationsachse 28 ausgeht und in der Förderknetsegmentebene 46 liegt, 30 Grad bis 75 Grad beträgt. Dabei schließen der erste Strahl 52 und der zweite Strahl 54 in einer Projektion der Strahlen 52, 54 auf, die Querschnittsebene einen Strahlenzentriwinkel ε von 45 Grad bis 90 Grad ein.

Der minimale Abstand A zwischen den Paddeln 22 und den Förderknetsegmenten 18 beträgt 1,5 mm bis 15,0 mm und bevorzugt 5,0 mm bis 10,0 mm, wie aus Fig. 5 ersichtlich.

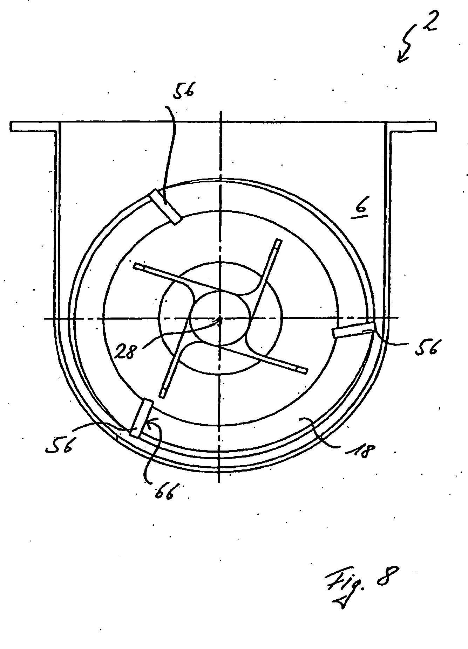

Aus Fig. 4 und Fig. 5 ist zu sehen, dass die zweite Welle 14 drei parallel zur Förderrichtung 20 angeordnete, zueinander regelmäßig beabstandete Streben 56 aufweist, an denen die Förderknetsegmente 18 fixiert sind. Die zweite Welle 14 weist zudem wenigstens ein kreisförmiges Fixierungselement 58 auf, an denen die Streben 56 der zweiten Welle 14 fixiert sind. Die erste Welle 12 ist dabei durch eine Ausnehmung 57 des kreisförmigen Fixierungselements 58 geführt und ist nicht gegenüber diesem festgelegt. Die beiden Wellen 12, 14 haben zudem einen entgegengesetzten Drehsinn, dargestellt in Fig. 5 für die erste Welle 12 durch einen Rundpfeil 62 und für die zweite Welle 14 durch einen weiteren Rundpfeil 64. Die Streben 56 können dabei im Querschnitt rund ausgebildet sein, um deren Reinigung zu erleichtern. Sie können jedoch auch eine in Rotationsrichtung 64 der zweiten Welle 14 dem Teig zugewandte Mitnehmerfläche 66 aufweisen, die im Querschnitt der Strebe 56 eben ausgebildet ist, wie in Fig. 8 dargestellt, oder die eine schaufelartige Krümmung aufweist.

### Bezugsziffern:

- 2: Knetvorrichtung
- 4: Wandung
- 6: Krietraum
- 8: Austragsöffnung
- 10: Eintragsbereich
- 12: erste Welle
- 14: zweite Welle
- 16: Steuerung
- 18: Förderknetsegment
- 20: Förderrichtung
- 22: Paddel
- 24: Zylindermantel
- 26: innere Kanten der Werkzeuge der zweiten Welle
- 28: Rotationsachse der zweiten Welle
- 30: Rotationsachse der ersten Welle
- 32: Paddelfläche
- 34: Paddelflächenebene
- 36: äußere Abschlusskante der Paddelfläche
- 38: innere Abschlusslinie
- 40: erster radialer Strahl Winkel α
- 42: weiterer radialer Strahl Winkel β
- 44: Arbeitsfläche
- 46: Förderknetsegmentebene
- 48: innere Abschlusskante der Arbeitsfläche
- 50: äußere Abschlusskante der Arbeitsfläche erster Anstellwinkel γ
- 52: erster Strahl weiterer Anstellwinkel δ
- 54: weiterer Strahl Strahlenzentriwinkel ε
- 56: Streben
- 57: Ausnehmung im ersten Fixierungselement
- 58: erstes Fixierungselement
- 62: Drehsinn erste Welle
- 64: Drehsinn zweite Welle
- 66: Mitnehmerfläche
- A: Abstand Paddel / Förderknetsegment

## Patentansprüche

1. Knetvorrichtung (2) zum Kneten und Mischen von Teig, mit einem umseitig zumindest bereichsweise von einer Wandung (4) begrenzten Knetraum (6), der eine Austragsöffnung (8) zum Austrag des gekneteten Teigs aus dem Knetraum (2) und einen an der der Austragsöffnung (8) abgewandten Seite des Knetraums (6) angeordneten Eintragsbereich (10) zur Befüllung des Knetraums (6) mit zu knetendem Teig aufweist, und mit zumindest zwei Wellen (12, 14), an denen im Knetraum (6) angeordnete Werkzeuge (18, 22) fixiert sind, wobei zumindest eines der Werkzeuge (18, 22) Teig vom Eintragsbereich (10) in Förderrichtung (20) zur Austragsöffnung (8) hin fördernd ausgebildet ist und die Drehzahlen der beiden motorisch angetriebenen Wellen (12, 14) getrennt voneinander mit Hilfe einer Steuerung (16) einstellbar und veränderbar sind und beide Wellen (12, 14) dergestalt voneinander abweichend mit Werkzeugen (18, 22) bestückt sind, dass die Förderwirkung der Gesamtheit der Werkzeuge (22) der ersten Welle (12) in Form eines Volumenstromes des im Knetraum (6) befindlichen Teiges in Förderrichtung (20) und/oder die Knetwirkung der Gesamtheit der Werkzeuge (22) der ersten Welle (12) in Form eines Volumenstromes des im Knetraum (6) befindlichen Teiges in Richtung zu den Werkzeugen (18) der anderen Welle (14) hin von der Förderwirkung und/oder der Knetwirkung der Gesamtheit der Werkzeuge (18) der zweiten Welle (14) bei jeweils gleicher Drehzahl der Wellen (12, 14) abweicht, wobei die erste Welle (12) und die daran fixierten Werkzeuge (22) innerhalb eines gedachten Zylindermantels (24) angeordnet sind, auf dem die zur ersten Welle (12) hinweisenden inneren Kanten (26) der an der zweiten Welle (14) fixierten Werkzeuge (18) während einer Rotation um die Achse (28) der zweiten Welle (14) laufen, wobei die Werkzeuge (22) der ersten Welle (12) von einer Mehrzahl Paddel (22) mit einer während einer Rotation der ersten Welle (12) im Knetraum (6) befindlichen Teig bewegenden Paddelfläche (32) gebildet werden und die Paddel (22) entlang der Welle (12) versetzt zueinander angeordnet sind und sich die Bewegungsbahnen der Paddelflächen (32) von zwei benachbarten Paddeln (22) während einer Rotation um die Achse (30) der ersten Welle (12) teilweise überlappen und die Werkzeuge (18) der zweiten Welle (14) von einer Mehrzahl Förderknetsegmenten (18) gebildet werden, die jeweils eine während einer Rotation der zweiten Welle (14) im Knetraum (6) befindlichen Teig bewegende Arbeitsfläche (44) aufweisen und entlang der Welle (14) versetzt zueinander angeordnet sind, wobei sich die Bewegungsbahnen der Arbeitsflächen (44) von zwei benachbarten Förderknetsegmenten (18) während einer Rotation um die Achse (28) der zweiten Welle (14) zumindest teilweise überlappen und wobei der minimale Abstand (A) zwischen den Paddeln (22) und den Förderknetsegmenten (18) 1,5 mm bis 15,0 mm und bevorzugt 5,0 bis 10,0 mm beträgt.

2. Knetvorrichtung (2) nach Anspruch 1, **dadurch gekennzeichnet, dass** die Abweichung der Förderwirkung der Gesamtheit der Werkzeuge (18) der zweiten Welle (14) mehr als doppelt so hoch ist, insbesondere mehr als neun mal so hoch ist, wie die Förderwirkung der Gesamtheit der Werkzeuge (22) der ersten Welle (12) bei jeweils gleicher Drehzahl.

3. Knetvorrichtung (2) nach einem der vorhergehenden Ansprüche, **dadurch gekennzeichnet, dass** allein die Gesamtheit der Werkzeuge (18) der zweiten Welle (14)
in Summe eine Förderwirkung aufweist.

4. Knetvorrichtung (2) nach einem der vorhergehenden Ansprüche, **dadurch gekennzeichnet, dass** die Rotationsachse (30) der ersten Welle (12) mit der Rotationsachse (28) der zweiten Welle (14) übereinstimmt.

5. Knetvorrichtung (2) nach Anspruch 4, **dadurch gekennzeichnet, dass** jede Paddelfläche (32) zu wenigstens 90 % in einer Paddelflächenebene (34) liegend ausgebildet ist.

6. Knetvorrichtung (2) nach einem der Ansprüche 4 oder 5, **dadurch gekennzeichnet, dass** die Paddelflächen (32) zu wenigstens 90 % parallel zur Rotationsachse (30) der ersten Welle (12) angeordnet sind.

7. Knetvorrichtung (2) nach einem der Ansprüche 4 bis 6, **dadurch gekennzeichnet, dass** die Paddelfläche (32) eine den Werkzeugen (18) der zweiten Welle (14) zugewandte äußere Abschlusskante (36) und eine dieser gegenüberliegende innere Abschlusslinie (38) aufweist, und ein radial von der Achse (30) der ersten Welle (12) ausgehender, die innere Abschlusslinie (38) streifender erster Strahl (40) einen Winkel α von 90 Grad bis 60 Grad mit der Paddelflächenebene (34) einschließt und ein die äußere Abschlusskante (36) streifender weiterer radialer Strahl (42) einen Winkel β zwischen 0 Grad und 35 Grad mit der Paddelflächenebene (34) einschließt.

8. Knetvorrichtung (2) nach einem der vorhergehenden Ansprüche, **dadurch gekennzeichnet, dass** die Arbeitsfläche (44) jedes Förderknetsegmentes (18) zu wenigstens 90 % in einer Förderknetsegmentebene (46) liegt.

9. Knetvorrichtung (2) nach einem der vorhergehenden Ansprüche, **dadurch gekennzeichnet, dass** jedes Förderknetsegment (18) jeweils eine den Werkzeugen (22) der ersten Welle (12) zugewandte innere Abschlusskante (48) und eine dieser gegenüberliegende, der Wandung (4) des Knetraums (6) zugewandte äußere Abschlusskante (50) aufweist, wobei beide Abschlusskanten (48, 50) dergestalt bogenförmig ausgebildet sind, dass die Förderknetsegmente (18) in einer Projektion auf eine senkrecht zur Rotationsachse (28) der zweiten Welle (14) verlaufende Querschnittsebene die Form eines Sektors eines Kreisringes mit einem Kreismittelpunkt und kreisbogenförmigen inneren und äußeren Abschlusskanten (48, 50) aufweist.

10. Knetvorrichtung (2) nach Anspruch 9, **gekennzeichnet durch** eine Neigung jeder Arbeitsfläche (44) relativ zur Rotationsachse (28) der zweiten Welle (14) dergestalt, dass ein erster Anstellwinkel γ zwischen der Rotationsachse (28) der zweiten Welle (14) und einem ersten Strahl (52), der in einer Projektion auf eine senkrecht zur Rotationsachse (28) der zweiten Welle (14) verlaufende Querschnittsebene von dieser Rotationsachse (28) ausgeht und in der Förderknetsegmentebene (46) des zugehörigen Förderknetsegmentes (18) an dem der Austrittsöffnung (8) abgewandten Ende der Arbeitsfläche (44) liegt, zwischen 90 Grad und 60 Grad beträgt und ein weiterer Anstellwinkel δ zwischen der Rotationsachse (28) der zweiten Welle (14) und einem weiteren Strahl (54), der in der Projektion auf eine senkrecht zur Rotationsachse (28) der zweiten Welle (14) verlaufende Querschnittsebene von dieser Rotationsachse (28) ausgeht und in der Förderknetsegmentebene (46) des zugehörigen Förderknetsegmentes (18) liegt, 30 Grad bis 75 Grad beträgt, wobei der Strahlenzentriwinkel ε zwischen dem ersten Strahl (52) und dem zweiten Strahl (54) in der Projektion der Strahlen (52, 54) auf die Querschnittsebene 45 Grad bis 90 Grad beträgt.

11. Knetvorrichtung (2) nach einem der vorhergehenden Ansprüche, **dadurch gekennzeichnet, dass** die Förderknetsegmente (18) dergestalt geformt und angeordnet sind, dass das Verhältnis der Förderwirkung der Gesamtheit der Förderknetsegmente (18) relativ zu deren Knetwirkung 1 bis 5 insbesondere 2,5 bis 3,5 beträgt.

12. Knetvorrichtung (2) nach einem der vorhergehenden Ansprüche, **dadurch gekennzeichnet, dass** das Verhältnis der Summe der Arbeitsflächen (44) der Förderknetsegmente (18) in einer Projektion auf eine Fläche senkrecht zur Förderrichtung (20) relativ zur Summe der Paddelflächen (32) der Paddel 0,2 bis 1,1 insbesondere 0,7 bis 0,9 beträgt.

13. Knetvorrichtung (2) nach einem der vorhergehenden Ansprüche, **dadurch gekennzeichnet, dass** eine Projektion der Paddelflächen (32) auf eine Ebene senkrecht zur Förderrichtung (20) während einer vollständigen Rotationsbewegung um die Rotationsache (30) der ersten Welle (12) die Form eines Kreisringes ergibt, wobei das Verhältnis der Summe der Arbeitsflächen (44) der Förderknetsegmente (18) in einer Projektion auf die Ebene senkrecht zur Förderrichtung (20) relativ zur Fläche dieses Kreisringes 0,2 bis 1,1 und insbesondere 0,7 bis 0,9 betragt.

## Claims

1. Kneading apparatus (2) for kneading and mixing dough, comprising a kneading chamber (6) that is delimited on all sides, at least in regions, by a wall (4) and that has a discharge opening (8) for discharging the kneaded dough from the kneading chamber (2) and an entry region (10), provided on the side of the kneading chamber (6) that faces away from the discharge opening (8), for filling the kneading chamber (6) with dough to be kneaded, and comprising at least two shafts (12, 14) on which tools (18, 22) arranged in the kneading chamber (6) are secured, wherein at least one of the tools (18, 22) is configured to convey dough in a conveying direction (20) from the entry region (10) towards the discharge opening (8), and the rotational speeds of the two motor-driven shafts (12, 14) can be set and changed independently of each other by means of a control unit (16), and the two shafts (12, 14) are each equipped differently with tools (18, 22) so that the conveying action of all the tools (22) of the first shaft (12) in the form of a volume stream of the dough located in the kneading chamber (6) in the conveying direction (20) and/or the kneading action of all the tools (22) of the first shaft (12) in the form of a volume stream of the dough located in the kneading chamber (6) in the direction towards the tools (18) of the other shaft (14) deviates from the conveying action and/or the kneading action of all the tools (18) of the second shaft (14) when the shafts (12, 14) have the same rotational speed, wherein the first shaft (12) and the tools (22) secured thereon are arranged within an imaginary cylindrical jacket (24), on which the inner edges (26) of the tools (18) secured on the second shaft (14), which edges point toward the first shaft (12), run during a rotation about the axis (28) of the second shaft (14), wherein the tools (22) of the first shaft (12) are formed by a plurality of paddles (22) having a paddle surface (32) that moves dough located in the kneading chamber (6) during a rotation of the first shaft (12), and the paddles (22) are arranged along the shaft (12) so as to be offset relative to each other and the movement paths of the paddle surfaces (32) of two adjacent paddles (22) overlap in part during a rotation about the axis (30) of the first shaft (12), and the tools (18) of the second shaft (14) are formed by a plurality of conveying kneading segments (18) that each have a working surface (44) that moves dough located in the kneading chamber (6) during a rotation of the second shaft (14) and are arranged along the shaft (14) so as to be offset relative to each other, wherein the movement paths of the working surfaces (44) of two adjacent conveying kneading segments (18) overlap at least in part during a rotation about the axis (28) of the second shaft (14), and wherein the minimum spacing (A) between the paddles (22) and the conveying kneading segments (18) is from 1.5 mm to 15.0 mm, and preferably from 5.0 to 10.0 mm.

2. Kneading apparatus (2) according to claim 1, **characterised in that** the deviation of the conveying action of all the tools (18) of the second shaft (14) is more than twice as high, in particular more than nine times as high, as the conveying action of all the tools (22) of the first shaft (12) when the rotational speed is the same for both shafts.

3. Kneading apparatus (2) according to either of the preceding claims, **characterised in that** only all the tools (18) of the second shaft (14) have a conveying action overall.

4. Kneading apparatus (2) according to any of the preceding claims, **characterised in that** the axis of rotation (30) of the first shaft (12) coincides with the axis of rotation (28) of the second shaft (14).

5. Kneading apparatus (2) according to claim 4, **characterised in that** each paddle surface (32) is designed so that at least 90 % thereof is positioned within a paddle surface plane (34).

6. Kneading apparatus (2) according to either claim 4 or claim 5, **characterised in that** the paddle surfaces (32) are arranged so that at least 90 % thereof are parallel to the axis of rotation (30) of the first shaft (12).

7. Kneading apparatus (2) according to any of claims 4 to 6, **characterised in that** the paddle surface (32) has an outer terminal edge (36) facing the tools (18) of the second shaft (14) and an inner terminal line (38) opposite thereto, and a first beam (40), originating radially from the axis (30) of the first shaft (12) and touching the inner terminal line (38), forms an angle α with the paddle surface plane (34) of between 90 degrees and 60 degrees, and a further radial beam (42) that touches the outer terminal edge (36) forms an angle β with the paddle surface plane (34) of between 0 degrees and 35 degrees.

8. Kneading apparatus (2) according to any of the preceding claims, **characterised in that** the working surface (44) of each conveying kneading segment (18) is positioned so that at least 90 % thereof is in a conveying kneading segment plane (46).

9. Kneading apparatus (2) according to any of the preceding claims, **characterised in that** each conveying kneading segment (18) has an inner terminal edge (48) facing the tools (22) of the first shaft (12) and an outer terminal edge (50) opposite thereto and facing the wall (4) of the kneading chamber (6), the two terminal edges (48, 50) being arcuate such that the conveying kneading segments (18), viewed in a projection onto a cross-sectional plane extending perpendicularly to the axis of rotation (28) of the second shaft (14), is in the shape of a sector of a circular ring having a circular centre point and circular arc-shaped inner and outer terminal edges (48, 50).

10. Kneading apparatus (2) according to claim 9, **characterised by** the working surfaces (44) each being inclined relative to the axis of rotation (28) of the second shaft (14) such that a first angle of attack γ between the axis of rotation (28) of the second shaft (14) and a first beam (52) is between 90 degrees and 60 degrees, the first beam, viewed in a projection onto a cross-sectional plane extending perpendicularly to the axis of rotation (28) of the second shaft (14), originating from said axis of rotation (28) and being positioned at the end of the working surface (44) facing away from the discharge opening (8) in the conveying kneading segment plane (46) of the corresponding conveying kneading segment (18), and a further angle of attack δ between the axis of rotation (28) of the second shaft (14) and a further beam (54) being from 30 degrees to 75 degrees, the further beam, viewed in a projection onto a cross-sectional plane extending perpendicularly to the axis of rotation (28) of the second shaft (14), originating from said axis of rotation (28) and being positioned in the conveying kneading segment plane (46) of the corresponding conveying kneading segment (18), the beam centring angle ε between the first beam (52) and the second beam (54) in the projection of the beams (52, 54) onto the cross-sectional plane being from 45 degrees to 90 degrees.

11. Kneading apparatus (2) according to any of the preceding claims, **characterised in that** the conveying kneading segments (18) are shaped and arranged such that the ratio of the conveying action of all the conveying kneading segments (18) relative to their kneading action is 1 to 5, in particular 2.5 to 3.5.

12. Kneading apparatus (2) according to any of the preceding claims, **characterised in that** the ratio of the sum of the working surfaces (44) of the conveying kneading segments (18), viewed in a projection onto a surface perpendicular to the conveying direction (20), relative to the sum of the paddle surfaces (32) of the paddles is 0.2 to 1.1, in particular 0.7 to 0.9.

13. Kneading apparatus (2) according to any of the preceding claims, **characterised in that** a projection of the paddle surfaces (32) onto a plane perpendicular to the conveying direction (20) during a complete rotational movement about the axis of rotation (30) of the first shaft (12) results in the shape of a circular ring, the ratio of the sum of the working surfaces (44) of the conveying kneading segments (18), viewed in a projection onto the plane perpendicular to the conveying direction (20), relative to the surface of said circular ring being 0.2 to 1.1, and in particular 0.7 to 0.9.

## Revendications

1. Dispositif de pétrissage (2) destiné à pétrir et mélanger de la pâte, ledit dispositif de pétrissage comprenant un espace de pétrissage (6) qui est délimité en périphérie au moins partiellement par une paroi (4) et qui comporte une ouverture de sortie (8) destinée à la sortie de la pâte pétrie de la chambre de pétrissage (2) et une zone d'entrée (10) disposée du côté de l'espace de pétrissage (6) opposé à l'ouverture de sortie (8) et destinée au remplissage de l'espace de pétrissage (6) avec la pâte à pétrir, et au moins deux arbres (12, 14) auxquels sont fixés des outils (18, 22) disposés dans l'espace de pétrissage (6), au moins un des outils (18, 22) étant conformé pour transporter la pâte dans le sens de transport (20) de la zone d'entrée (10) à l'ouverture de sortie (8) et les vitesses de rotation des deux arbres (12, 14) entraînés par moteur étant variables et pouvant être réglées séparément l'une de l'autre au moyen d'un dispositif de commande (16), et les deux arbres (12, 14) étant équipés d'outils (18, 22) de manière différente de sorte que l'action de transport de tous les outils (22) du premier arbre (12) sous la forme d'un volume d'écoulement de la pâte, se trouvant dans l'espace de pétrissage (6), dans le sens de transport (20) et/ou l'action de pétrissage de tous les outils (22) du premier arbre (12) sous la forme d'un volume d'écoulement de la pâte, se trouvant dans l'espace de pétrissage (6), en direction des outils (18) de l'autre arbre (14) différant de l'action de transport et/ou de l'action de pétrissage de tous les outils (18) du second arbre (14) à chaque fois pour une même vitesse de rotation des arbres (12, 14), le premier arbre (12) et les outils (22), fixés à celui-ci, étant disposés à l'intérieur d'une enveloppe cylindrique imaginaire (24) sur laquelle les bords intérieurs (26), pointant vers le premier arbre (12), des outils (18) fixés au second arbre (14) courent pendant une rotation sur l'axe (28) du second arbre (14), les outils (22) du premier arbre (12) étant formés par une pluralité de palettes (22) pourvue d'une face (32) déplaçant la pâte, se trouvant dans l'espace de pétrissage (6), pendant la rotation du premier arbre (12) et les palettes (22) étant disposées le long de l'axe (12) de façon décalée les unes des autres et les trajectoires des faces (32) de deux palettes (22) adjacentes se chevauchant partiellement pendant la rotation sur l'axe (30) du premier arbre (12) et les outils (18) du second arbre (14) étant formés par une pluralité de segments de pétrissage et de transport (18) qui comportent chacun une face de travail (44) qui déplace la pâte, se trouvant dans l'espace de pétrissage (6), pendant la rotation du second arbre (14) et qui sont disposés le long de l'arbre (14) de façon décalée les unes des autres, les trajectoires des faces de travail (44) de deux segments de pétrissage et de transport (18) adjacents se chevauchant au moins partiellement pendant la rotation sur l'axe (28) du second arbre (14) et la distance minimale (A) entre les palettes (22) et les segments de pétrissage et de transport (18) étant de 1,5 mm à 15,0 mm et de préférence de 5,0 à 10,0 mm.

2. Dispositif de pétrissage (2) selon la revendication 1, **caractérisé en ce que** la différence d'action de transport de tous les outils (18) du second arbre (14) est plus de deux fois plus élevée, en particulier plus de neuf fois plus élevée, que l'action de transport, de tous les outils (22) du premier arbre (12), à chaque fois à vitesse égale.

3. Dispositif de pétrissage (2) selon l'une des revendications précédentes, **caractérisé en ce que** seule la totalité des outils (18) du second arbre (14) a dans l'ensemble une action de transport.

4. Dispositif de pétrissage (2) selon l'une des revendications précédentes, **caractérisé en ce que** l'axe de rotation (30) du premier arbre (12) coïncident avec l'axe de rotation (28) du second arbre (14).

5. Dispositif de pétrissage (2) selon la revendication 4, **caractérisé en ce que** la face (32) de chaque palette est formée à au moins 90% dans un plan de face de pale (34).

6. Dispositif de pétrissage (2) selon l'une des revendications 4 ou 5, **caractérisé en ce que** les faces de palette (32) du premier arbre (12) sont disposées à au moins 90% parallèlement à l'axe de rotation (30).

7. Dispositif de pétrissage (2) selon l'une des revendications 4 à 6, **caractérisé en ce que** la face de pale (32) comporte un bord terminal extérieur (36) tourné vers les outils (18) du second arbre (14) et une ligne terminale intérieure (38) opposé à ce bord et un premier faisceau (40) partant radialement de l'axe (30) du premier arbre (12) et renforçant la ligne terminale intérieure (38) fait un angle α de 90 degrés à 60 degrés avec le plan de face de palette (34) et un autre faisceau radial (42), renforçant le bord terminal extérieur (36), fait un angle β entre 0 degré et 35 degrés avec le plan de face de pale (34).

8. Dispositif de pétrissage (2) selon l'une des revendications précédentes, **caractérisé en ce que** la face de travail (44) de chaque segment de pétrissage et de transport (18) est à au moins 90% dans un plan de segment de pétrissage et de transport (46).

9. Dispositif de pétrissage (2) selon l'une des revendications précédentes, **caractérisé en ce que** chaque segment de pétrissage et de transport (18) comporte un bord terminal intérieur (48), tourné vers les outils (22) du premier arbre (12), et un bord terminal extérieur (50) opposé à ce bord terminal intérieur et tourné vers la paroi (4) de l'espace de pétrissage (6), les deux bords terminaux (48, 50) ayant une conformation incurvée telle que les segments de pétrissage et de transport (18) dans une projection sur un plan en coupe transversale s'étendant perpendiculairement à l'axe de rotation (28) du second arbre (14) a la forme d'un secteur d'anneau circulaire comportant un centre de cercle et des bords terminaux circulaires intérieur et extérieur (48, 50) en forme d'arc de cercle.

10. Dispositif de pétrissage (2) selon la revendication 9, **caractérisé par** une inclinaison de chaque face de travail (44) par rapport à l'axe de rotation (28) du second arbre (14) de telle sorte qu'un premier angle y entre l'axe de rotation (28) du second arbre (14) et un premier faisceau (52), qui part de cet axe de rotation (28) dans une projection sur un plan en coupe transversale s'étendant perpendiculairement à l'axe de rotation (28) du second arbre (14) et qui se trouve, dans le plan (46) du segment de pétrissage et de transport (18) associé, à l'extrémité de la face de travail (44), opposée à l'ouverture de sortie (8), est compris entre 90 degrés et 60 degrés et un autre angle d'incidence δ entre l'axe de rotation (28) du second arbre (14) et un autre faisceau (54), qui part de cet axe de rotation (28) dans une projection sur un plan en coupe transversale s'étendant perpendiculairement à l'axe de rotation (28) du second arbre (14) et qui se trouve dans le plan (46) du segment de pétrissage et de transport associé (18), est de 30 degrés à 75 degrés, l'angle au centre de faisceau ε entre le premier faisceau (52) et le second faisceau (54) dans la projection des faisceau (52, 54) sur le plan en coupe transversale étant de 45 degrés à 90 degrés.

11. Dispositif de pétrissage (2) selon l'une des revendications précédentes, **caractérisé en ce que** les segments de pétrissage et de transport (18) sont formés et disposés de telle sorte que le rapport de l'action de transport de la totalité des segments de pétrissage et de transport (18) par rapport à son action de pétrissage est 1 à 5, en particulier de 2,5 à 3,5.

12. Dispositif de pétrissage (2) selon l'une des revendications précédentes, **caractérisé en ce que** le rapport de la somme des faces de travail (44) des segments de pétrissage et de transport (18) dans une projection sur une surface perpendiculaire à la direction de transport (20) à la somme des faces (32) des palettes est de 0,2 à 1,1, en particulier de 0,7 à 0,9.

13. Dispositif de pétrissage (2) selon l'une quelconque des revendications précédentes, **caractérisé en ce qu'**une projection des faces de palettes (32) sur un plan perpendiculaire à la direction de transport (20) lors d'un mouvement de rotation complet sur l'axe de rotation (30) du premier arbre (12) a la forme d'un anneau circulaire, le rapport de la somme des faces de travail (44) des segments de pétrissage et de transport (18) dans une projection sur le plan perpendiculaire à la direction de transport (20) à la face de cet anneau circulaire étant de 0,2 à 1,1 et en particulier de 0,7 à 0,9.
